# EUROPEAN PATENT APPLICATION

(11) **EP 3 086 016 A1**
(43) Date of publication of application: **26.10.2016**
(21) Application number: 15164677.5
(22) Date of filing: 22.04.2015
(51) Int. Cl.: F16M 11/06, G03B 17/56

(54) **MOTORIZED CAMERA HOLDER**

(71) Applicant: Novona AG, 9100 Herisau (CH)
(72) Inventor: Delavy, Marcel, 8003 Zürich (CH); Bürdel, Simon, 5072 Oeschgen (CH)
(74) Representative: Liebetanz, Michael

(57) **Abstract**

A motorized camera holder comprises a base body (12), an attachment for a mount (90) for an electronic device comprising a camera, an attachment (11) for a prolongating stick (80), a battery, a control circuit board (35), a first motor (20) and a second motor (25). The stick attachment (11) is rotatably connected to the base body (12) for a rotation around a first axis being the longitudinal axis of an attachable prolongating stick (80), wherein the smart phone mount attachment is rotatably connected to the base body (12) for a rotation around a second axis being oriented perpendicular to said longitudinal first axis. The rotation around the longitudinal first axis and the second axis are driven by the first motor (20) and second motor (25), respectively, mounted within the base body (12). The motors (20, 25) are controlled by signals provided by the control circuit board (35) and all are connected with the battery for energy supply.

## Description

### TECHNICAL FIELD

The present invention relates to a motorized camera holder.

### PRIOR ART

A motorized camera holder is known from GB 2,514,759 being a camera holder onto which a portable image capture device may be mounted, comprising a body portion and a rotation mechanism. In operable cooperation with the engaging component it enables panoramic images of up to 360 degrees to be shot with a camera phone, smartphone or notepad computer having a camera facility. This can be achieved through a cradle for securely retaining devices of different sizes; the body portion comprises a base to the body portion for mounting on a bottle; and configuring it to rotate at a rate of 360 degrees per 120 seconds or less. Said device enables the user to take a panorama picture through turning the camera around a vertical axis.

WO 2014/029238 discloses a mounting support of a ball type monitoring device with two stepping motors for driving the mounting support body to rotate in a horizontal and a vertical direction, respectively. A camera is movably installed in the middle part of the mounting support body. Stoppers prevent the mounting support body and/or the camera to be displaced outside predetermined ranges. A control circuit capable of automatically setting respective rotation starting points and end points thereof and recording the rotational displacement thereof when powered on; and the control circuit can control the stepping motors to automatically change direction or stop rotating at respective rotation starting points or end points and any rotational displacement position thereof.

DE 10 2014 014 191 B3 relates to a movable camera support system for motion-controlled time-lapse, panoramic photography, 360 degrees photography and videography, which can be put together from individual system components which are releasably connected to one another, and which has a camera attachment means, a base plate and a control unit.

Smartphone users often use the integrated camera for taking pictures, often including themselves, so called selfies. For that they have to hold the smartphone, extend their arm and orient the objective into the desired direction. There are so-called selfie sticks on the market comprising a handle, attached at or included into a rod and a holder for the smartphone at the opposite end. The rod can be a telescopic rod. Using the function of delayed picture taking the user is able to take pictures from an extended viewpoint.

### SUMMARY OF THE INVENTION

It is an aim of the present invention to improve such selfie sticks for improved functions with a lightweight interface apparatus.

The known selfie sticks can be combined by the user with a remote control for the smartphone to take pictures directly.

It is inter alia a further object to allow the user to orient the smartphone at any moment. A further object is related to taking panorama photos.

A motorized camera holder comprises a base body, an attachment for a mount for an electronic device comprising a camera, an attachment for a prolongating stick, a battery, a control circuit board, a first motor and a second motor. The stick attachment is rotatably connected to the base body for a rotation around a first axis being the longitudinal axis of an attachable prolongating stick, wherein the smart phone mount attachment is rotatably connected to the base body for a rotation around a second axis being oriented perpendicular to said longitudinal first axis. The rotation around the longitudinal first axis is driven by the first motor mounted within the base body, wherein the rotation around said second axis is driven by the second motor mounted within the base body. The two motors are controlled by signals provided by the control circuit board and motors and control circuit board are connected with the battery for energy supply.

The electronic device comprising a camera to be held can be incorporated into a mobile phone, a smart phone or a tablet, respectively.

Preferably, the base body comprises a lower base body part comprising the first motor and an upper base body part comprising the second motor, wherein the two body parts are connected with a bifurcating connection frame having two separated arms.

The connection frame can comprise a bifurcating part connected to the lower base body part at a right angle to the longitudinal axis of the first motor and opening up into the two separated arms while turning upwards and away from the lower base body part, wherein these two separated arms join into the upper frame body part inclined towards the rotation axis of the first motor.

The battery can be accommodated in the lower base body part and the control circuit board can be accomodated in the upper base body part, or vice versa. The cables connecting motors as well as the battery with the control circuit board are preferably provided in the bifurcated separated arms of the base body.

A plug socket as interface is provided at the junction of the two separated arms at the lower and/or at the upper base body part. The space between the two separated arms allows the introduction of a plug into the plug socket connection, wherein the plug socket connection is optionally a mini USB connection. The advantage to provide an interface at that place is the protected position between the arms.

A remote control is provided comprising a transmitter to send control signals to an associated transmitter provided within the control circuit board to control the rotational position of the first motor, the rotational position of the second motor and optionally to control a smartphone to be mounted at the smartphone mount to trigger taking photos or films.

The remote control preferably comprises a remote control holder adapted to be attached at the prolongation stick, especially comprising a hollow sleeve or two semi sleeves to be attached and clamped around the stick.

The attachment for the prolongating stick preferably comprises a screw connection so that the holder can be screwed on such a prolongation stick. The attachment for the smartphone mount comprises a clamping connection for easy attachment and removal of the electronic device with the camera.

The second motor can be positioned at the upper base body, wherein the shape of the casing of motor is provided between two attachments of a rotatable head of the smartphone mount, wherein one attachment of the head comprises a joint, wherein the other is connected with the driven shaft of motor.

The base body parts as well as the separated arms connecting them are curved and inclined in a way that a smartphone or tablet held in the smartphone/tablet holder and especially its camera is essentially rotatable in the prolongation of the axis of prolongation stick.

The two bifurcated separated arms may comprise an essentially horizontal base part oriented away from the longitudinal axis to allow the back inclination of the upper base body part of between 10 and 30 degrees against the longitudinal axis of the first motor so that a smartphone held within the smartphone mount can be rotated downwards towards the lower base body part without touching the connecting separated arms. In other words, with such a holder it is possible to take photos from above directed downwards.

The battery can be a rechargable battery being positioned horizontally above the lower base body part inside a one piece plastic base body and is then charged via the plug socket connection, e.g. via an USB connection.

A selfie stick comprising a holder can comprise a prolongating stick and a smart phone mount as well as optionally comprises a handle and/or a tripod attached at the prolongating stick. Such a selfie stick can comprise a telescopic stick as prolongating stick.

The remote control can comprise one or more one-button functions, as for making a panoramic picture. Then pushing the specific button triggers the control unit to make a predetermined panning shot over e.g. 90, 180, 270, 360 degrees or any other predetermined angle. If the prolongating stick connected with the device is held vertically, then only the first motor is activated to perform a pivot movement of the camera around the vertical axis.

The control unit may further comprise one or more inclination sensors, so that the control unit calculates the necessary position of the two motors to give the camera of an attached smartphone a specific orientation, e.g. horizontal to make a panoramic picture, even when the stick is held in any angle. Then a specific control order given via the remote control to the control unit will drive the motors to orient the camera into the predetermined direction. Of course, this principle can also be applied to take single photos to orient the camera automatically in a position where the lower border of the picture taken is horizontal although the prolongated stick is held in an inclined position.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematical front view on the device according to an embodiment of the invention with further elements of a selfie stick;
- Fig. 2: shows a schematical side view on the device according Fig. 1 with a detail representation of a remote control of the device;
- Fig. 3: shows a schematical perspective view of the device according Fig. 1 without remote control;
- Fig. 4: shows a schematical back view of the device according Fig. 3;
- Fig. 5: shows a schematical side view of the device according Fig. 3;
- Fig. 6: shows a schematical view from below on the device according Fig. 3; and
- Fig. 7: shows a block diagram of the control unit and remote control of the device according Fig. 1.

### DESCRIPTION OF PREFERRED EMBODIMENTS

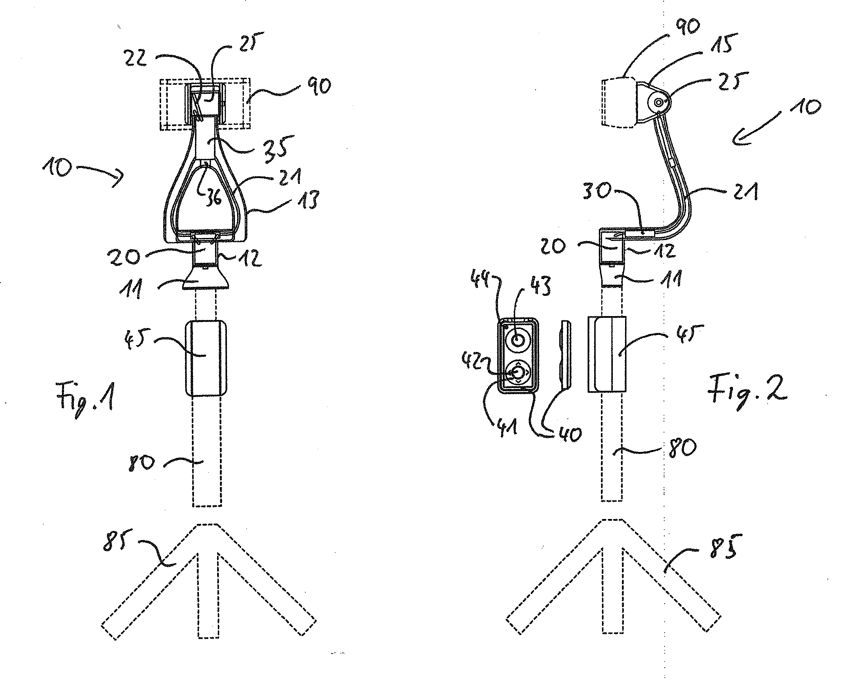

Fig. 1 shows a schematical front view on the device 10 according to an embodiment of the invention with further elements of a selfie stick. Such a known element of a selfie stick is the smart phone mount 90 on one side and the rod 80 on the other side. The rod 80 can be a telescopic stick and may comprise a handle (not shown) and a tripod 85. These additional elements of a selfie stick are shown in broken lines, since they are not part of the present invention. The device 10 is to be mounted between the rod 80 and the smartphone holder 90, which can be already be in possession of the user. It is noted that Fig 1 and 2 show further elements which are hidden inside the device 10 as cables 21, motors 20 and 25, battery 30 and a circuit board 35.

The detachable remote control 40 of the device (shown in Fig. 2) can be attached to the rod 80 via a remote control holder 45. The remote control holder 45 comprises in the embodiment shown a hollow sleeve or two semi sleeves which can be attached and clamped around the rod 80.

The device 10 comprises an attachment to rod 11 interface, preferably a screw connection. The attachment to rod 11 interface is rotatably connected to the base body 12 in prolongation of the longitudinal axis of the rod 80. The rotation is controlled by a motor 20 for vertical rotation mounted within the base body.

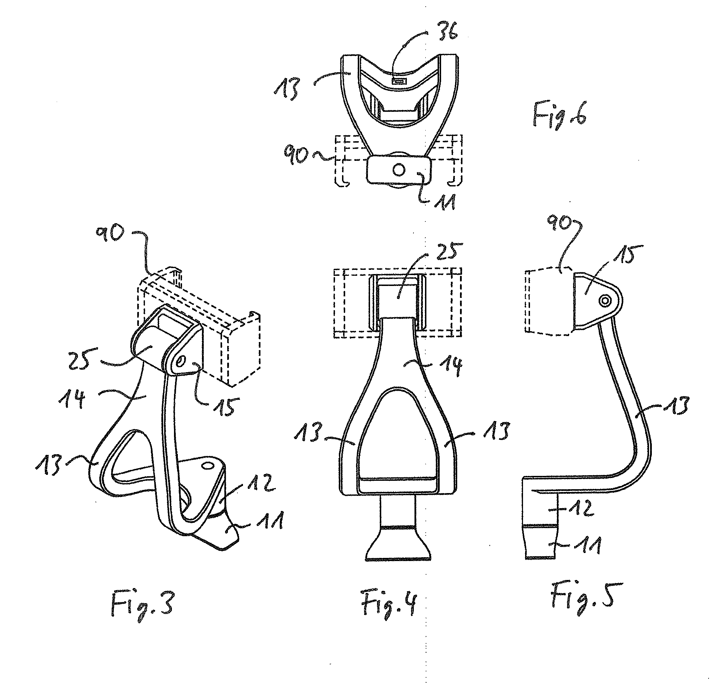

The base body 12 is attached to the bifurcated connection frame 13. The further description also references to Fig. 2 to 6, showing a schematical side view on the device according Fig. 1 with a detail representation of a remote control of the device, a schematical perspective view of the device according Fig. 1 without remote control; a schematical back view, side view and view from below of the device according Fig. 3, respectively.

The bifurcated connection frame 13 comprises a bifurcating part connected to the lower base body 12 at a right angle and opening up into two frame parts while turning upwards and away from the lower base body 12. Then these two frame parts join into an upper frame body 14 inclined towards the rotation axis of motor 20.

The upper frame body 14 holds at the upper end a motor for horizontal rotation 25. The cylindrical shape of the casing of motor 25 is provided between two attachments of rotatable head 15. One attachment comprises a joint, the other is connected with the driven shaft of motor 25. The rotatable head 15 connects to a smartphone holder 90 shown in broken lines, being not part of the invention as such. Then the motor for horizontal rotation 25 provides for a rotation of the rotatable head 15 around its horizontal axis.

From the back view of Fig. 4 it can be seen that the two side frame parts are providing a space between them allow to introduce a cable into the plug connection 36 as shown in the view from below of Fig. 6. Such a plug connection 36 is preferably a mini USB connection but can also be a proprietary electronic interface.

It can also be seen from Fig. 4 that the curvature of the bifurcated connection frame 13 is provided an inclined in a way that a smartphone or tablet held in the smartphone/tablet holder 90 is provided in the prolongation of the axis of rod 80.

The two bifurcated connection frame 13 comprises the horizontal base part to allow the back inclination of the frame part of between 10 and 30 degrees in view of the axis of the motor for vertical rotation 20 so that a smartphone held within the holder 90 can be rotated downwards towards the base body without touching the connection frame 13.

As mentioned at the beginning of the description, Fig. 1 and 2 show further elements hidden in the base body 12 and upper frame 14. These elements are provided in an integrated fashion to reduce weight of the device and to enhance functionality. The battery 30 is a rechargable battery. It is located horizontally above the base body 12 in the lower part of the bifurcated frame before the two arms split. The battery 30 is connected with cables 21 to a circuit board 35 integrated into the upper frame body 14 just above the point where the bifurcated arms 13 rejoin together. The circuit board 35 is connected with cables 22 to the motor for horizontal rotation 25 and of course with the motor for vertical rotation 20. Preferably, some of cables 21 run through each of the two hollow arms 13. The bifurcated connection frame can be hollow as shown in Fig. 1 and 2 or the electronic elements can be embedded in solid plastics.

The advantage of positioning circuit board 35 in the upper frame 14 allows for integration of the mini-USB interface into the circuit board 35 to position the plug 36 just at the point where the two arms 13 split. Then any charging or communication cable to be connected with the plug 36 is better protected at this position against damage from inadvertent movements.

The device according to the invention comprises thus two motors 20 and 25, one driven axis being oriented perpendicular to the other; the vertical axis being in line with the rod 80 to be attached at the attachment 11 and the horizontal axis (if the rod is held vertically) being slightly offset from the vertical axis so that the smartphone is essentially held in prolongation of the rod 80.

Remote control 40 as shown in Fig. 2 can be attached, e.g. clipped onto the remote control holder 45 to be positioned on the rod 80. The remote control 40 comprises direction keys 41 allowing to control either motor 10 and 25, touching the left part of 41 rotates the motor 20 in way turning the base body to the left on the rod 80 so that the camera of the smartphone turns to the left. Then, of course touching the right part of 41 rotates the motor 20 in way turning the base body to the right on the rod 80 so that the camera of the smartphone turns to the right. Activating the direction keys 41 with the upwards sign rotates the motor 25 to turn the rotatable head upwards, so that so that the camera of the smartphone is turned upwards and on the other side activating the opposite (downward) arrow of 41 turns the smartphone towards the rod 80 of the selfie stick.

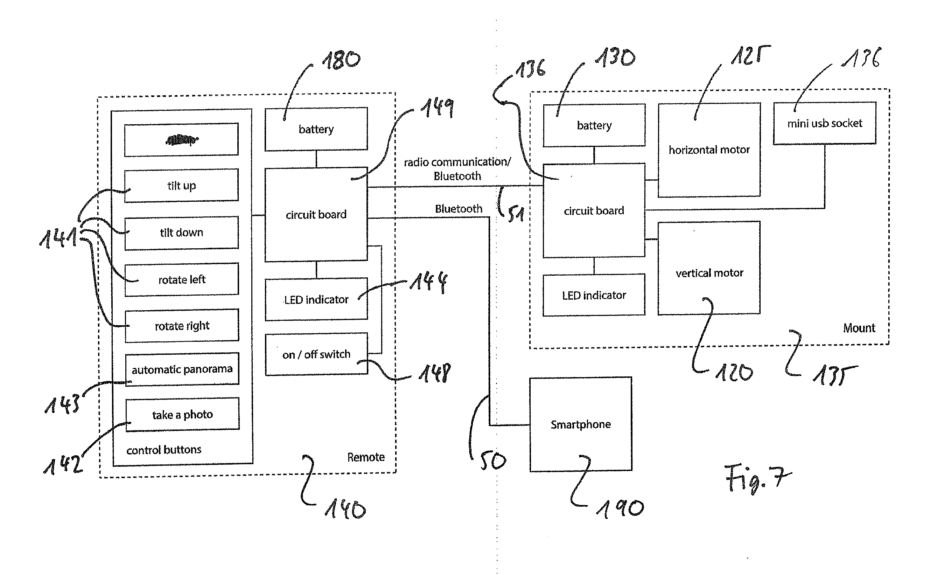

Fig. 7 shows a block diagram of the control mount 135 and remote control 140 of the device according Fig. 1. The box 140 relates to the electronic circuit of and integrated within the remote control 40. The remote control comprises direction keys 41 which are controlled by four direction contacts 141 for tilt up, tilt down, rotate left and rotate right.

One button 142 is provided for taking photos, i.e. giving a signal for the smartphone to start or stop a function e.g. to take a video. The remote control 40 comprises an automatic panorama button 143 having a twofold function. On one side it starts the process of taking a photo and on the other side it automatically drives the horizontal motor 25 for a predetermined angle to take said photo.

All these control buttons are connected with a circuit board 149 of the remote control 40. The remote control 40 comprises a battery 180 as well as a functional LED indicator 144, preferably a multicolor LED to show different function status of the device. Finally an on/off switch 148 is provided. The remote control 40 has integrated one or more communication channels. A first communication channel 50 is a bluetooth channel to the control unit 190 of the smart phone to control the photo function of the smart phone.

The smartphone mount control 135 comprises all electronic components of the device 10. This comprises a circuit board 136 connected and preferably integrated directly with mini-USB socket 146. The circuit board 136 is connected with the battery 130 and the control elements 125 of the horizontal motor 25 as well as with the control elements 120 of the vertical motor 20.

In a further embodiment, the programmable control unit within the circuit board 35 integrated into device 10 further comprises one or more inclination sensors on the circuit board 35, so that the control unit is adapted to calculate the necessary position of the two motors 20 and 25 to give the camera of an attached smartphone a specific orientation. Usually the calculated position is a horizontal position in the sense that the camera is in a position where the lower border of any picture taken with the camera is horizontal independent from the inclination of the prolongated stick which is usually not easily held at a specific angle in an inclined position.to have the camera in line with the horizont. Then a specific control order given via the remote control 40 to the control unit will drive the motors 20 and/or 25 to orient the camera of the attached smartphone into the predetermined direction. Of course, this principle can be applied to take single photos, panoramic photos or video sequences.

### LIST OF REFERENCE SIGNS

| | | | |
|---|---|---|---|
| 10 | motorized camera holder | 51 | wireless connection |
| 11 | attachment to rod | 80 | rod / selfie stick |
| 12 | base body | 85 | detachable tripod |
| 13 | bifurcated connection frame | 90 | smartphone mount |
| 14 | upper frame body | 120 | vertical motor control |
| 15 | rotatable head | 125 | horizontal motor control |
| 20 | motor for vertical rotation | 130 | battery |
| 21 | electric cable | 135 | control mount |
| 22 | electric cable | 136 | control unit of circuit board |
| 25 | motor for horizontal rotation | 146 | external interface / mini usb |
| 30 | battery | 140 | remote control |
| 35 | circuit board | 142 | photo button |
| 36 | plug connection / mini-usb | 143 | automatic panorama |
| 40 | detachable remote control | 144 | LED indicator |
| 41 | direction keys | 148 | on/off switch |
| 42 | photo button | 149 | PCB of remote control |
| 43 | panorama button | 180 | battery of remote |
| 44 | indicator light / LED | 190 | smart phone |
| 45 | remote control holder | | |
| 50 | wireless connection | | |

## Claims

1. A motorized camera holder (10) comprising a base body (12, 14), an attachment (15) for a mount (90) for an electronic device comprising a camera, an attachment (11) for a prolongating stick (80), a battery (30), a control circuit board (35), a first motor (20) and a second motor (25), wherein the stick attachment (11) is rotatably connected to the base body (12, 14) for a rotation around a first axis being the longitudinal axis of an attachable prolongating stick (80), wherein the smart phone mount attachment (15) is rotatably connected to the base body (12, 14) for a rotation around a second axis being oriented perpendicular to said longitudinal first axis, wherein the rotation around the longitudinal first axis is driven by the first motor (20) mounted within the base body (12, 14), wherein the rotation around said second axis is driven by the second motor (25) mounted within the base body (12, 14), wherein the two motors (20, 25) are controlled by signals provided by the control circuit board (35) and motors (20, 25) and control circuit board (35) are connected with the battery (30) for energy supply.

2. The holder (10) according to claim 1, wherein the base body (12, 14) comprises a lower base body part (12) comprising the first motor (20) and an upper base body part (14) comprising the second motor (25), wherein the two body parts (12, 14) are connected with a bifurcating connection frame (13) having two separated arms.

3. The holder (10) according to claim 2, wherein the connection frame (13) comprises a bifurcating part connected to the lower base body part (12) at a right angle to the longitudinal axis of the first motor (20) and opening up into the two separated arms while turning upwards and away from the lower base body part (12), wherein these two separated arms join into the upper frame body part (14) inclined towards the rotation axis of the first motor (20).

4. The holder (10) according to any of the preceding claims, wherein the battery (30) is accomodated in the lower base body part (12), the control circuit board (35) is accomodated in the upper base body part (14) or vice versa.

5. The holder (10) according to claim 4, wherein cables (21) connecting motors (20 and 25) as well as the battery (30) with the control circuit board (35) are provided in the bifurcated separated arms of the base body (12, 14).

6. The holder (10) according to claim 5, wherein a plug socket (36) is provided at the junction of the two separated arms at the lower and/or at the upper base body part (12, 14), wherein the space between the two separated arms allows the introduction of a plug into the plug socket connection (36), wherein the plug socket connection is optionally a mini USB connection.

7. The holder (10) according to any one of the preceding claims, comprising a remote control (40) comprising a transmitter to send control signals to an associated transmitter provided within the control circuit board (35) to control the rotational position of the first motor (20), the rotational position of the second motor (25) and optionally to control a smartphone to be mounted at the mount (90) to trigger taking photos or films.

8. The holder (10) according to claim 7, wherein the remote control (40) comprises a remote control holder (45) adapted to be attached at the prolongation stick (80), especially comprising a hollow sleeve or two semi sleeves to be attached and clamped around the stick (80).

9. The holder (10) according to any of the preceding claims, wherein the attachment (11) for a prolongating stick (80) comprises a screw connection and/or the attachment (15) for the mount (90) comprises a clamping connection.

10. The holder (10) according to any of the preceding claims, wherein the second motor (25) is positioned at the upper base body (14), wherein the shape of the casing of motor (25) is provided between two attachments of a rotatable head (15) of the mount (90), wherein one attachment of the head comprises a joint, wherein the other is connected with the driven shaft of motor (25).

11. The holder (10) according to any of the preceding claims, wherein the base body parts (12, 14) as well as the separated arms connecting them are curved and inclined in a way that an electronic device comprising a camera, e.g. a smartphone or tablet held in the smartphone/tablet holder (90) and especially its camera is essentially rotatable in the prolongation of the axis of prolongation stick (80).

12. The holder (10) according to claim 11, wherein the two bifurcated separated arms (13) comprise an essentially horizontal base part oriented away from the longitudinal axis to allow the back inclination of the upper base body part (14) of between 10 and 30 degrees against the longitudinal axis of the first motor (20) so that a smartphone held within the mount (90) can be rotated downwards towards the lower base body part (12) without touching the connecting separated arms (13).

13. The holder (10) according to any of the preceding claims, wherein the device comprises one or more inclination sensors, connected with the control circuit board (35), being adapted to calculate a position of the motors (20, 25) so that the lower border of any photo taken by a user with an electronic device held in the mount (90) is horizontal.

14. The holder (10) according to any of the preceding claims, wherein the battery (30) is a rechargable battery being positioned horizontally above the lower base body part (12).

15. A selfie stick comprising a holder (10) according to any of the preceding claims, a prolongating stick (80) and a mount (90) as well as optionally comprises a handle and/or a tripod (85) attached at the prolongating stick (80), being optionally a telescopic stick.
